# EUROPEAN PATENT SPECIFICATION

(11) **EP 3 343 394 B1**
(45) Date of publication and mention of the grant of the patent: **25.08.2021**
(21) Application number: 16382657.1
(22) Date of filing: 27.12.2016
(51) Int. Cl.: G06F 16/51, G06F 16/583, G06F 16/29

(54) **METHOD FOR AND SYSTEM FOR CREATING GLOBAL THEMATIC MAPS BASED ON EXTRACTION OF IMAGE DESCRIPTORS**
VERFAHREN UND SYSTEM ZUR ERZEUGUNG GLOBALER THEMATISCHER KARTEN AUF BASIS VON EXTRAHIERTEN BILDDESKRIPTOREN
PROCÉDÉ ET SYSTÈME DE CRÉATION DE PLANISPHÈRES THÉMATIQUES GLOBAL SUR LA BASE D'EXTRACTION DE DESCRIPTEURS D'IMAGE

(43) Date of publication of application: 04.07.2018
(73) Proprietor: Fundacion Centro de Tecnologias de Interaccion Visual y comunicaciones Vicomtech, 20009 San Sebastian (Guipuzcoa) (ES); Universidad Del Pais Vasco Euskal Herriko Unibertsitatea, 48940 Leioa (Vizcaya) (ES)
(72) Inventor: QUARTULLI, Marco, 20009 San Sebastián (Guipúzcoa) (ES); LOZANO, Javier, 20009 San Sebastián (Guipúzcoa) (ES); GARCÍA OLAIZOLA, Igor, 20009 San Sebastián (Guipúzcoa) (ES); ZULUETA GUERRERO, Ekaitz, 48940 Leioa (Vizcaya) (ES)
(74) Representative: Balder IP Law, S.L.

(56) References cited:
- KR-A- 20120 121 599
- HAFIANE A ET AL: "Region-based CBIR in GIS with local space filling curves to spatial representation", PATTERN RECOGNITION LETTERS, ELSEVIER, AMSTERDAM, NL, vol. 27, no. 4, 1 March 2006 (2006-03-01), pages 259-267, XP027922730, ISSN: 0167-8655 [retrieved on 2006-03-01]

## Description

### TECHNICAL FIELD

The present invention relates to the field of image mining, that is to say, accessing, searching and exploring large databases of images. More specifically, it relates to Earth Observation (EO) images and to methods for making data available to users.

### BACKGROUND OF THE INVENTION

In many professional areas, such as those dealing with ecologists, forestry and agricultural managers, global warming researchers, fishery and wildlife experts, urbanists and refugee flux administrators, among others, specialised maps are required. For these experts, it is unbearable to create and maintain manually these specialised maps and to keep them up to date including the weekly changes that can be detected by modern multi-satellite constellations.

Currently, there exist semi-automatic, interactively supervised thematic mapping tools working on global remote sensing imagery repositories that enable professionals or experts to build up-to-date high resolution global descriptions of our planet and its evolution. Given the data volumes produced by modern day satellite constellations like the EU Copernicus Sentinels, remote sensing catalogues can span tens to thousands of server computers. Therefore, there is a need for these interactive tools to be able to manage this big data from space in near real-time for interactive use in a web browser, with a maximum response time of a few seconds (for example, around two seconds). Achieving this goal presents significant scientific and technological challenges.

Content-Based Image Retrieval (CBIR) techniques aim at searching for images in large databases according to their content, described by automatic extraction of primitive features, such as textures, shapes and relevant colors, among others. However, exhaustive searches have high complexity and prohibitive search times for very large datasets.

Repeatedly traversing the whole global catalogue to find each specific instance of interest would prove too slow for interactive discovery. The near real-time mapping tools that applicative domain experts need therefore require pre-computed global scale indices for fast classification and search. Those indices, just like the ones at the end of a large reference book or an encyclopedia, can be created for example by grouping items together in small ordered groups of similar characteristics. The objective of the creation of the indices is to allow search to happen rapidly. Those characteristics can correspond to a set of automatically calculated item descriptors: the indices need to describe both the geo-spatial / geo-temporal locations and the multiple intrinsic characteristics of the objects that are visible on the planet surface. In sum, efficiently creating a complete index of a catalogue allowing fast search of high-dimensional objects is a key aspect to global mapping.

Current solutions are based on either trees with source coding re-ranking ([Jégou, H., Tavenard, R., Douze, M., & Amsaleg, L. (2011, May). Searching in one billion vectors:re-rank with source coding. In 2011 IEEE International Conference on Acoustics, Speech and Signal Processing (ICASSP) (pp. 861-864). IEEE.) or Locality-Sensitive Hashes ([Demir, B., & Bruzzo, L. (2014, July). Kernel-based hashing for content-based image retrval in large remote sensing data archive. In 2014 IEEE Geoscience and Remote Sensing Symposium (pp. 3542-3545). IEEE.). However, these solutions still provide limited results in terms of performance.

In order to cope with these limitations, a methodology that may be applied to parallel processing architectures for near real-time interactive thematic mapping and EO catalog mining has been disclosed in "Beyond the lambda architecture: Effective scheduling for large scale EO information mining and interactive thematic mapping" [M. Quartulli, J. Lozano and I. G. Olaizola, "Beyond the lambda architecture: Effective scheduling for large scale EO information mining and interactive thematic mapping," 2015 IEEE International Geoscience and Remote Sensing Symposium (IGARSS), Milan, 2015, pp. 1492-1495. doi: 10.1109/IGARSS.2015.7326062], in which effective scheduling mechanisms based on Hilbert curves are proposed.

However, the reported proposal is limited to geographical aspects only and cannot be used in content-based search.

HAFIANE A ET AL: "Region-based CBIR in GIS with local space filling curves to spatial representation",PATTERN RECOGNITION LETTERS, ELSEVIER, AMSTERDAM, NL, vol. 27, no. 4, 1 March 2006 (2006-03-01), pages 259-267, ISSN: 0167-8655 discloses a region-based retrieval method for satellite images using motif co-occurrence matrix (MCM) in conjunction with spatial relationships. Each image is decomposed into coherent segments, MCM is computed for each region and the spatial relationship among them are evaluated by using a ^{*}-tree representation.

### DESCRIPTION OF THE INVENTION

The present invention attempts to solve the drawbacks mentioned above by means of a method and system for interactive global thematic mapping based on novel indexing techniques and space-filling curves. The method and system perform better than conventional indexing methods and systems.

The object of the invention is accomplished by the independent claims. Further embodiments are the subject-matter of the dependent claims.

In a first aspect of the invention, a method for obtaining a thematic map from a web server is provided. It comprises a first stage of data provision and a second stage of execution of an online query. The first stage comprises: ingesting a plurality of image tiles from at least one database located in the cloud, said ingestion being done by attaching to each tile a unique identifier; adding to said unique identifier a vector describing spatial and temporal location and at least one application-independent characteristic, thus obtaining a mixed attribute space comprising a geographical sub-space, a temporal sub-space and at least one content descriptor attribute sub-space; defining a space-filling curve index traversing a whole single space encompassing said geographical sub-space, temporal sub-space and at least one descriptors sub-space or defining a space-filling curve index traversing the whole geographic sub-space, a space-filling curve index traversing the whole temporal sub-space and a space-filling curve index traversing the whole at least one content descriptor attribute sub-space. The second stage comprises: from at least one query example, extracting geographic, temporal and content descriptor attributes; for the geographical sub-space, temporal sub-space and content descriptor sub-space, and associated space-filling curve index, of said ingested image tiles: selecting a query sub-space and extracting one or more attributes for said query example corresponding to said query sub-space, extracting a distance of relevance for said query sub-space; and extracting all image tiles whose attributes in said query sub-space belong to a neighborhood defined by said distance of relevance and extracting the unique identifiers of said extracted image tiles; and obtaining a thematic map corresponding to the selected image tiles.

In embodiments of the invention, the method further comprises repeating the stages of for the geographical sub-space, temporal sub-space and content descriptor sub-space, and associated space-filling curve index, of said ingested image tiles: selecting a query sub-space and extracting one or more attributes for said query example corresponding to said query sub-space, extracting a distance of relevance for said query sub-space; and extracting all image tiles whose attributes in said query sub-space belong to a neighborhood defined by said distance of relevance and extracting the unique identifiers of said extracted image tiles, for the remaining sub-spaces of said geographical sub-space, temporal sub-space and content descriptor sub-space.

In embodiments of the invention, the stage of selecting a query sub-space comprises providing the location of a geographical spot clicked on a web map.

In embodiments of the invention the stage of data provision is performed offline.

In embodiments of the invention, the at least one application-independent characteristic attached to each tile is one or more of the following features: texture, color and shape.

In embodiments of the invention, the space-filling curve is a Peano curve or a Hilbert curve.

In embodiments of the invention, the distance of relevance is a geographical distance.

In embodiments of the invention, the image tiles are obtained and managed by at least one remote sensing application.

In another aspect of the invention, a system for obtaining a thematic map is disclosed. It comprises: data provision means configured for obtaining a mixed attribute space comprising a geographical sub-space, a temporal sub-space and at least one content descriptor attribute sub-space by ingesting a plurality of image tiles by attaching to each tile a unique identifier and by adding to said unique identifier a vector describing spatial and temporal location and at least one application-independent characteristic and for defining a space-filling curve index traversing said geographical sub-space, temporal sub-space and at least one content descriptor attribute sub-space; means for executing an online query and obtaining a thematic map corresponding to the selected image tiles by extracting geographic, temporal and content descriptor attributes from at least one query example and by, for the geographical sub-space, temporal sub-space and content descriptor sub-space, and associated space-filling curve index, of said ingested image tiles, selecting a query sub-space and extracting one or more attributes for said query example corresponding to said query sub-space, extracting a distance of relevance for said query sub-space; and extracting all image tiles whose attributes in said query sub-space belong to a neighborhood defined by said distance of relevance and extracting the unique identifiers of said extracted image tiles; and a communications interface for communicating with a user.

In another aspect of the invention, a computer program comprising computer program code means adapted to perform the steps of the method already disclosed is provided when said program is run on a computer, a digital signal processor, a field-programmable gate array, an application-specific integrated circuit, a micro-processor, a micro-controller, or any other form of programmable hardware.

Additional advantages and features of the invention will become apparent from the detail description that follows and will be particularly pointed out in the appended claims.

### BRIEF DESCRIPTION OF THE DRAWINGS

As a complement to the description and with a view to contributing towards an improved understanding of the characteristics of the invention, according to an example of a practical example thereof, a set of drawings is attached as an integral part of this description, which by way of illustration and not limitation, represent the following:
Figure 1 represents a block diagram of a method for efficient localized content-based search according to an embodiment of the invention.
Figure 2A represents a flow diagram of the stage of data provision according to a particular embodiment of the method as illustrated in figure 1.
Figure 2B represents a flow diagram of the stage of data provision according to an alternative embodiment of the method as illustrated in figure 1.
Figure 3 represents a flow diagram of the stage of online query execution of the method as illustrated in figure 1.
Figure 4 shows a block diagram corresponding to a high-level architectural decomposition of a system implementing the method described in relation to figures 1-3.
Figures 5A, 5B and 6 show examples of results obtained after executing the method according to the invention.

### DESCRIPTION OF AN EMBODIMENT OF THE INVENTION

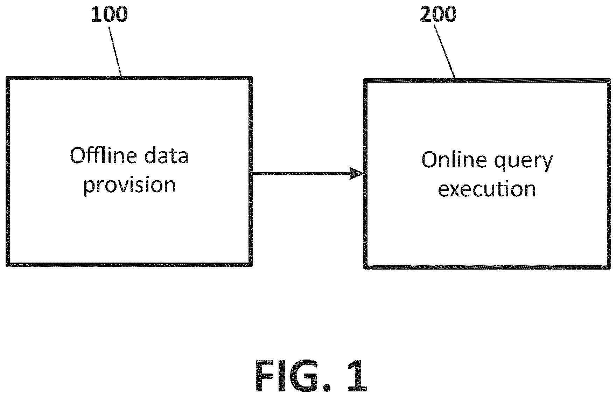

Figure 1 represents in two blocks the main stages performed in a method for obtaining a thematic map according to an embodiment of the invention. The method is based on efficiently localized content searching. The method requires a first stage 100 of data provision, which may be performed offline, meaning that there is no need for a connection in between the servers and the final user, who might be offline. Once the stage of data provision 100 is performed, an online query can be executed, as represented by a second stage 200.

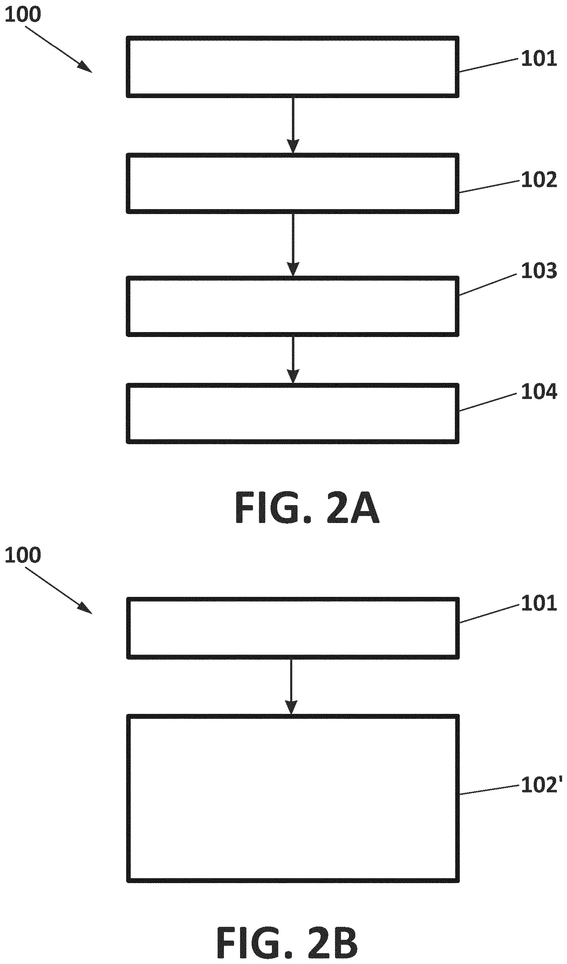

Figure 2A represents a flow diagram of stage 100 of data provision. In the context of the present invention the term "data" refers to tiles. In the context of the present invention, the term "tile" means a piece, typically rectangular, of an image. In other words, a tile is the result of dividing an image into small, rectangular pieces. Tiles can then be processed independently from the image to which they originally belonged. Tiles are for example obtained from images acquired by Earth Observation instruments, such as multi-spectral cameras or radar systems mounted on satellites. These systems for obtaining images of the Earth are out of the scope of the present invention.

As show in figure 2A, the data provision stage 100 involves several steps. First (step 101), tiles are ingested. In the context of the present application, the expression "data ingestion" refers to the process of obtaining and importing data for immediate use in a database. In this step 101, the required input objects (that is, tiles) are characterized by attaching to each object or tile a unique identifier. The unique identifier is used to be able to distinguish the identity of identical yet separate objects or tiles.

In step 102, this identifier is complemented by an ordered list with fixed length of numeric and categorical attribute values describing a set of application-independent characteristics. The content description is composed in a standardized manner by extracting a well-known set of descriptors from each image tile, for instance as described by Chauffert et al. 2012 [N. Chauffert, J. Israel, and B. Le Saux, "Boosting for interactive man-made structure classification," in Geoscience and Remote Sensing Symposium (IGARSS), 2012 IEEE International. IEEE, 2012, pp. 6856-6859]. In other words, the attribute values describing a set of application-independent characteristics are the mentioned descriptors. Thus, a vector describing spatial and temporal location and at least one application-independent characteristic are added to the unique identifier, thus obtaining a mixed attribute space comprising a geographical sub-space, a temporal sub-space and at least one content descriptor attribute sub-space.

The application-independent characteristics are typically descriptors of the tile content in terms of "texture", "color" and "shape". These characteristics are application-independent for example because they are evaluated objectively by a fully automatic feature extraction sub-system which is out of the scope of the present invention. The result of this step 102 is the ingestion/creation of a space in which each tile has a location in terms of content descriptors. This space is also referred to as descriptor space. In the present case of global thematic mapping, this descriptor space has or can be represented as having a plurality of dimensions that respectively correspond to a plurality of descriptors/characteristics/features needed to describe tile contents. In this context, the term "features" means the same as "application-independent characteristics" and is strongly related to a "descriptor", which indicates a "feature needed to describe a geographical object". In other words, there is one dimension per each feature or descriptor used to describe the geographical objects or tiles. Non-limiting examples of features needed to describe image tiles are texture, shapes and relevant color.

The features (or characteristics or descriptors) define the set of numerical or categorical indicators that need to be provided in order to fully describe an object by its localization in a space of descriptors. For example, if a tile is said to have characteristics color, shape, texture, those characteristics correspond to a space of tiles with dimensionality three.

Again in next step 102, a space-filling curve index traversing the whole descriptor space is defined. A space-filling curve is a mathematical construction that traverses an N-dimensional space — where N comprises the sum of (a) geographical dimensions, (b) temporal dimension and (c) descriptor dimensions — through a 1-dimensional path that never crosses itself and that passes through all possible positions in that space.

In embodiments of the invention, a Peano curve or a Hilbert curve is used, passing through all positions in the mixed space. Other space-filling curves may be used instead. Space-filling curves have a useful locality property: distances on the curve are directly related to distances in the mixed space with a plurality of dimensions that correspond to a respective plurality of spatio-temporal location indicators and characteristics needed to describe geographical objects such as image tiles. This locality property can be exploited for efficient query execution (stage 200 in figure 1) and classification.

Once the step 102 of defining a space-filling curve index traversing the whole geographic sub-space is performed, in step 103 a temporal axis is defined allowing to order tiles based on the acquisition date of their image of origin. Furthermore, spatial location attribute values like for instance latitude, longitude and optionally height above sea level are added to temporal location and a new space filling curve is defined for this space as well.

Finally, in step 104 a space-filling curve index traversing the whole high-dimensional mixed space comprising both application-independent content descriptors and temporal and geospatial attributes is defined. This mixed high dimensional space has dimensions that correspond to for instance (a) geographic dimensions such as latitude, longitude and optionally height above sea level (also referred to as geo-spatial dimensions or geographical sub-space), (b) a temporal dimension (also referred to as temporal sub-space), corresponding to the acquisition date for the image the tile is extracted from, and (c) groups of characteristics correspond in this sense to sub-spaces, for instance latitude and longitude to a geographic sub-space, and color, shape, texture to a descriptor sub-space.

The present method deals with how space-filling curves in these spaces can be used as an index for the tiles.

Figure 2B shows an alternative embodiment, in which steps 102, 103 and 104 in figure 2A are performed in a single step 102'. It is possible to consider three separate spaces for temporal, geospatial and descriptor sub-spaces, as considered in figure 2A, in which case the space is divided into a two or three-dimensional geographic (geo-spatial) sub-space, a one-dimensional temporal sub-space and a high-dimensional (or multidimensional) descriptor sub-space. In the alternative embodiment shown in figure 2B, it is possible to consider a single parametrization for the full N-dimensional space globally encompassing geo-spatial, temporal and descriptor dimensions. This second possibility generally provides better specificity and performance. This single parametrization for the full N-dimensional space is represented by step 102' in figure 2B. Step 101 is common to the two possibilities (figures 2A and 2B).

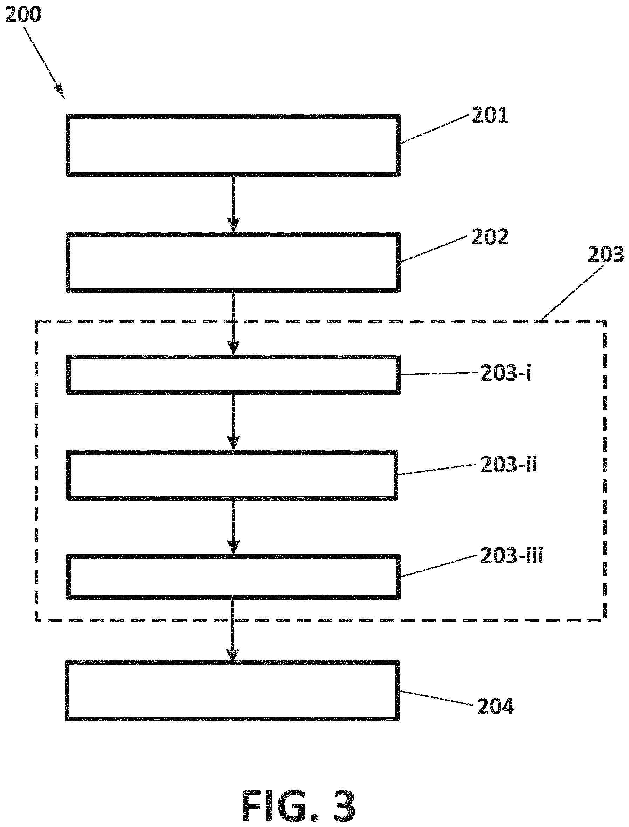

Now, the stage 100 of data provision schematically shown in figure 1 has been performed. Then, online queries can be executed (stage 200) for rapidly obtaining a thematic map, as explained in detail with reference to figure 3.

First (step 201), a person (for example an expert on a specific domain) provides a list of search criteria relevant to the query, each criterion corresponding to a sub-space and to a sub-space filling curve defined in the ingestion phase. For instance, the user might declare via a web interface that they are interested in using as search criteria geographic proximity and content similarity, corresponding to the geographic sub-space filling curve and to the content descriptor sub-space filling curve respectively.

Then the user provides a query item (a query or query example), for instance via a suitable web interface, which is formulated in terms of examples of data regions. Non-limiting examples of queries are a single tile or a set of tiles or a geospatial polygon intersecting one or more tiles or a set of geospatial polygons together with one or more temporal intervals again intersecting a number of tiles, with a number of labels. As a matter of example, in the particular case of a forest mapping applications, a possible example might be represented for example by a set of polygons that the forestry expert draws on a web map obtained by a dedicated web map server around forests with known characteristics of interest that will be used to extend a search to global dimensions for forests with similar characteristics (for instance, infested by a similar invading species). This step can be omitted if there is already a set of available examples with high quality and with labels of interest to the user.

Next (step 202), a complete set of attributes is extracted for the query examples. These are the same attributes that have been extracted for all the tiles ingested in the ingestion phase. For instance, geographic, temporal and application-independent content descriptors can be extracted for the tile pixels corresponding to the examples. The descriptors in particular are extracted by the same feature extraction sub-system which is used in the ingestion phase (step 100) so that the descriptors for the examples are directly comparable to the ones for the ingested global image coverage tiles.

Then (step 203), for each sub-space defined in the ingestion phase (geographical sub-space, temporal sub-space and features sub-space) and therefore for each associated space-filling curve index, the following steps are performed:
- A query sub-space is selected (step 203-i). The query sub-space may be a for instance geographical.
- The one or more attributes for the query example corresponding to the current sub-space are extracted. For instance, latitude and longitude for the current example are obtained.
- A distance of relevance for the specific sub-space is extracted from a memory buffer populated by a procedure that uses a configuration file (step 203-ii). As a matter of example, in a particular case a geographical distance, for example of 10 meters, might be extracted.
- This distance is used to define a neighborhood of the example in the current sub-space. For instance, in the particular case referred to above, the neighborhood is a set of positions on the space filling curve defined in the geographical sub-space. This set of positions is occupied by a set of ingested tiles with geographical location near the query example. Given that the space filling curve is pre-calculated in the ingestion phase, this set of nearby tiles belonging to the neighborhood is much more efficient to extract on the space filling curve that on the circle centered on the query example item and having a given radius in the full sub-space.
- All tiles Ingested in the database whose attributes in the current sub-space belong to the neighborhood defined above are extracted (step 203-iii) and their unique identifiers are stored in a temporary memory buffer.

This procedure is repeated for the case of all other sub-spaces, including the content descriptor sub-space, which is managed using a space-filling curve as well, in a manner similar to the geographical sub-space and to the temporal one.

Finally (step 204), the sets of tile identifiers recorded in each of the temporary memory buffers corresponding to each one of the sub-spaces are intersected with each other, and therefore the tile identifiers that do not appear in each of the selected sub-spaces are discarded and the remaining ones can be returned to the user.

The result of this step 204 is a thematic map — for instance represented in a web map interface — in which part of the ingested tiles are drawn as muted or off and part of the tiles are shown as highlighted or on. The ingested tiles that are highlighted are those that have been selected by the preceding steps to be relevant to the query examples provided by the user according to the criteria specified in the query also provided by the user. For instance, nearby tiles (geographic sub-space) similar to the query example (content descriptor sub-space) may be highlighted, while the rest of the map may be drawn or rendered as muted or off. In other words, in the obtained thematic map, only the objects having the selected descriptors are highlighted as relevant.

If a set of growing distances of relevance is generated by the procedure using a configuration file in step 203-ii (for instance 10, 50 and 100m) and extracted from the relevant memory buffer, then the previous steps can be repeated in order to allow the thematic map composed of highlighted and muted tiles to grow starting from the query example tiles and progressively extend in the relevant query sub-spaces provided by the user, for instance progressively highlighting ingested tiles that are further away in the geographic space and more diverse in terms of content descriptors for the query examples provided by the user. This allows users to interact more rapidly with the system, immediately obtaining a few relevant results and then progressively more extended results.

Like in figure 2B, in which a single parametrization for the full N-dimensional space globally encompassing geo-spatial, temporal and descriptor dimensions is considered, step 203 in figure 3 can be performed at once for a single full N-dimensional space encompassing geo-spatial, temporal and descriptor dimensions. In other words, operational indices operate directly considering a single N-dimensional curve for the joint geospatial, temporal and descriptor space.

So far, a method for creating a thematic map having certain features represented by selected descriptors has been described. Non-limiting examples of thematic maps that can be created are maps of specific forests (including specific trees defined for example by color, shape and/or texture), different crops, sports grounds and swimming pools. These maps can be automatically obtained on demand.

As explained in relation to figure 3, the method enables to execute online queries for obtaining a thematic map starting from a particular geographical spot selected on a web map. Such online query execution permits the integration of efficient spatio-temporal and content search capabilities within web map servers, along with a simple interface that enables navigation and the monitoring of geospatial learning.

At the same time, the volume of data managed by remote sensing applications which are out of the scope of the present invention motivates the transfer of the proposed method (algorithm) to cloud environments under the Big Data paradigm.

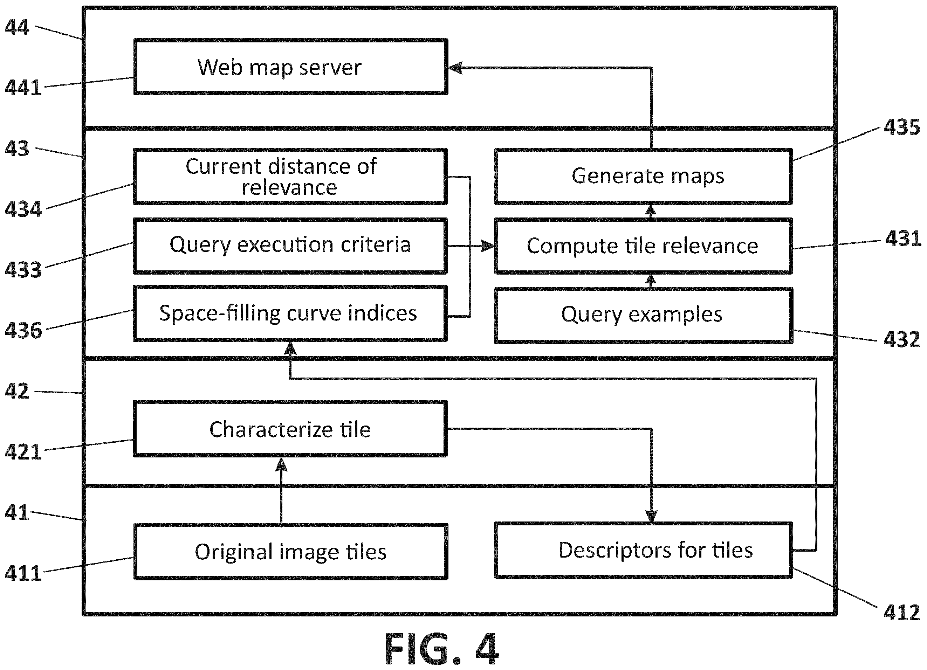

Figure 4 shows a block diagram corresponding to a high-level architecture of a system implementing the method described in relation to figures 1-3. A lowest layer 41 contains data repositories for both the remote sensing product tiles ingested in the ingestion phase ("Original image tiles" 411) and for their extracted spatio-temporal and application-independent content descriptor attributes extracted in the ingestion phase (Spatio-temporal and content "descriptors for tiles" 412). An original image tile in the first data repository 411 and spatio-temporal and content descriptors 412 for that specific tile can be matched by using the unique identifiers stored with them in the ingestion phase (step 101). In figure 4, data repositories for original image tiles are represented as 411 and data repositories for content descriptor for tiles are represented as 412. In embodiments of the invention, these data repositories 411, 412 are databases. The data repositories are preferably located in the cloud.

Turning back to the illustrated architecture, a second layer 42 includes the functionality required for characterizing a given ingested tile. This is also related to a third layer 43 described in detail later, in which the functionality required for computing the relevance of a tile ("compute tile relevance" 431) for a given query example (optionally from a "query examples" repository 432) and from a set of query execution criteria/sub-spaces of relevance (stored into and optionally retrieved from a "query execution criteria" repository 433) at a current "distance of relevance" 434 is computed. In the second layer 42, a functionality for characterizing a tile, that is to say, for extracting spatio-temporal and content descriptor attributes from the original data ("characterize tile" 421) is included. In figure 4, block 435, comprised in layer 43, refers to means for generating thematic maps once the tile relevance is computed (block 431). Block 412, comprised in layer 41, refers to means for extracting content descriptor attributes from the original data (tiles). These means 435, 412 and, in general, the functionalities of layers 41, 42, 43, are typically implemented in processing means, such a processor (i.e. computer, microprocessor, etc.). These layers are typically implemented in the cloud.

The third layer 43 in the illustrated architecture encompasses the functionality needed for the creation of stored queries corresponding to stored and labeled example sets ("query examples" 432) as referred to in method step 201, for the extraction of the current distance of relevance 434 and for their application to the evaluation of the content of each input tile in terms of the user interests specified by training. Block 436 "Space-filling curve indices" refers to a computed set of space-filling curve indices that are generated based on the attributes of the ingested tiles, including geo-spatial, temporal and content-based ones. These indices are used for the computation of the relevance of a given ingested tile (at block 431) for a given query. Means 431 and 436 are typically implemented in processing means, such a processor (i.e. computer, microprocessor, etc.). Layer 43 is also implemented in the cloud.

Note that Figure 4 is not a purely architectural diagram because functional blocks and their connecting arrows refer to method steps. In this figure, together with the schematic architecture, the method steps are shown. The "query execution criteria" block 433 in layer 43 is related to step 202 in figure 3, in which geographic, temporal and feature descriptors are extracted from the image tiles ingested in the ingestion process.

Finally, the fourth layer 44 centralizes communication with the client interface. In a preferred embodiment, it is implemented by means of a web server 441.

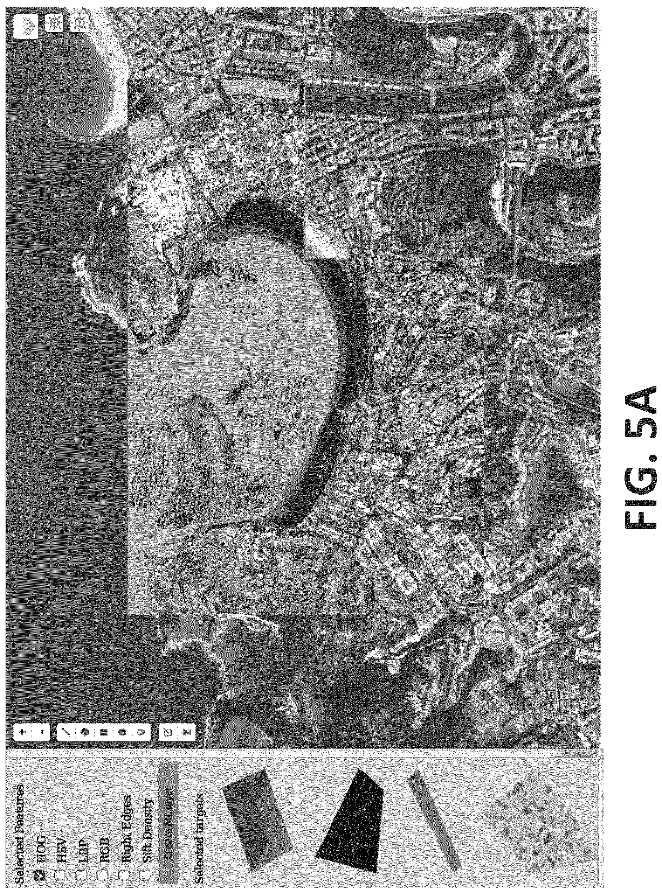

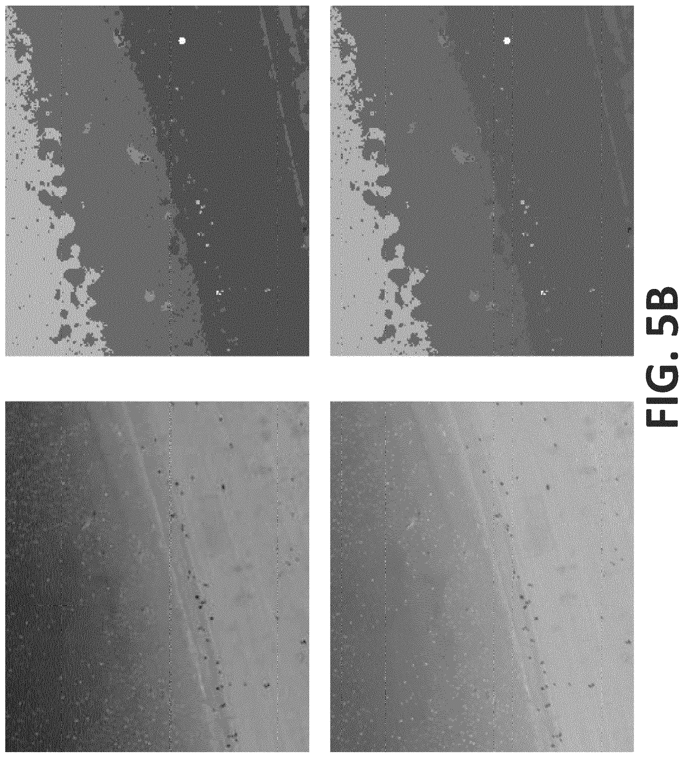

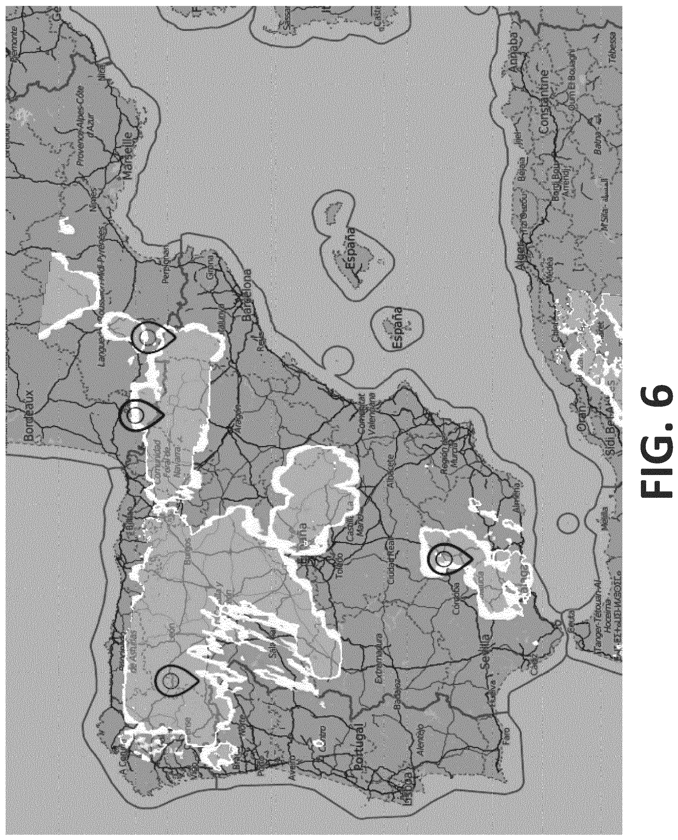

A prototype implementing the method of the invention and having a web-based interface for inputting/outputting data has been made. Examples of results obtained after executing the inventive method are shown with respect to figures 5A, 5B and 6. Figure 5A shows how thematic mapping is enabled by supervised learning from very high resolution remote sensing imagery data. The image shows at the same time remote sensing images used to create a map, in a background layer, and the result of the classification of these remote sensing images, in a new map layer, based on selected example queries, in the left side of the image behind "Selected targets", by a final user. Figure 5B shows a detail of the result shown in figure 5A, where a comparative between background layer tile and processed tile, where pixels could by grouped based on different grey levels, is shown. At the same time, this grouping process has a semantic value that remote sensing images do not have before the supervised learning process.

Figure 6 shows another example showing how thematic mapping can be used for generating specialized maps from meteorological forecasts through a web platform. Note how highlighted tiles are represented as four stains on the map, while non-relevant muted tiles are represented as a background remote sensing image layer covering most of the map.

The examples prove the practical value of overcoming the current state of art, in which the two areas are separated, which requires a continuous involvement of remote sensing experts in thematic mapping intensive tasks: labour intensive tasks are supplemented by the integration of the scalable machine learning engines and web map servers as described in the method of the invention.

Thanks to the method of the invention, thematic maps, such as referring to specific forests, different crops, sports grounds, swimming pools, among many others, can be automatically obtained on demand. The method uses computing resources distributed over the internet.

Throughout this document, the word "comprises" and variants thereof (such as "comprising", etc.) must not be interpreted as having an exclusive meaning, in other words, they do not exclude the possibility of what is being described incorporating other elements, steps, etc.

At the same time, the invention is not limited to the specific embodiments described herein and also extends, for example, to variants that may be embodied by an average person skilled in the art (for example, with regard to the choice of materials, dimensions, components, configuration, etc.), within the scope of what is inferred from the claims.

## Claims

1. A method for obtaining a thematic map from a web server, comprising a first stage (100) of data provision, comprising:
ingesting (101) a plurality of image tiles from at least one database located in the cloud, said ingestion being done by attaching to each tile a unique identifier,
adding to said unique identifier a vector describing spatial and temporal location and at least one application-independent characteristic, thus obtaining a mixed attribute space comprising a geographical sub-space, a temporal sub-space and at least one content descriptor attribute sub-space;
defining a space-filling curve index (102') traversing a whole single space encompassing said geographical sub-space, temporal sub-space and at least one descriptors sub-space or defining a space-filling curve index (102) traversing the whole geographic sub-space, a space-filling curve index (103) traversing the whole temporal sub-space and a space-filling curve index (104) traversing the whole at least one content descriptor attribute sub-space; and
a second stage (200) of execution of an online query, comprising:
from at least one query example, extracting (202) geographic, temporal and content descriptor attributes;
for the geographical sub-space, temporal sub-space and content descriptor sub-space, and associated space-filling curve index, of said ingested image tiles:
selecting (203-i) a query sub-space and extracting one or more attributes for said query example corresponding to said query sub-space
extracting (203-ii) a distance of relevance for said query sub-space; and
extracting (203-iii) all image tiles whose attributes in said query sub-space belong to a neighborhood defined by said distance of relevance and extracting the unique identifiers of said extracted image tiles;
obtaining (204) a thematic map corresponding to the selected image tiles.

2. The method of claim 1 further comprising repeating stages (203-i, 203-ii, 203-iii and 204) for the remaining sub-spaces of said geographical sub-space, temporal sub-space and content descriptor sub-space.

3. The method of either claim 1 or 2, wherein said stage of selecting (203-i) a query sub-space comprises providing the location of a geographical spot clicked on a web map.

4. The method of any preceding claims, wherein said stage (100) of data provision is performed offline.

5. The method of any preceding claims, wherein said at least one application-independent characteristic attached to each tile is one or more of the following features: texture, color and shape.

6. The method of any preceding claims, wherein said space-filling curve is a Peano curve or a Hilbert curve.

7. The method of any preceding claims, wherein said distance of relevance is a geographical distance.

8. The method of any preceding claims, wherein said image tiles are obtained and managed by at least one remote sensing application.

9. A system for obtaining a thematic map, comprising:
data provision (100) means configured for obtaining a mixed attribute space comprising a geographical sub-space, a temporal sub-space and at least one content descriptor attribute sub-space by ingesting (101) a plurality of image tiles by attaching to each tile a unique identifier and by adding to said unique identifier a vector describing spatial and temporal location and at least one application-independent characteristic and for defining a space-filling curve index (102') traversing said geographical sub-space, temporal sub-space and at least one content descriptor attribute sub-space;
means for executing an online query (200) and obtaining a thematic map corresponding to the selected image tiles by extracting (202) geographic, temporal and content descriptor attributes from at least one query example and by, for the geographical sub-space, temporal sub-space and content descriptor sub-space, and associated space-filling curve index, of said ingested image tiles, selecting (203-i) a query sub-space and extracting one or more attributes for said query example corresponding to said query sub-space, extracting (203-ii) a distance of relevance for said query sub-space; and extracting (203-iii) all image tiles whose attributes in said query sub-space belong to a neighborhood defined by said distance of relevance and extracting the unique identifiers of said extracted image tiles; and
a communications interface (44) for communicating with a user.

10. A computer program comprising computer program code means adapted to perform the steps of the method according to any claims from 1 to 8 when said program is run on a computer, a digital signal processor, a field-programmable gate array, an application-specific integrated circuit, a micro-processor, a micro-controller, or any other form of programmable hardware.

## Patentansprüche

1. Verfahren zum Erhalten einer thematischen Karte von einem Webserver, mit einem ersten Schritt (100) zum Bereitstellen von Daten, mit:
Einlesen (101) einer Vielzahl von Bildkacheln von mindestens einer in einer Cloud angeordneten Datenbank, wobei das Einlesen das Anhängen einer eindeutigen Identifizierung an jede Kachel beinhaltet;
Hinzufügen eines Vektors, der den räumlichen und zeitlichen Ort beschreibt, und mindestens eines anwendungsunabhängigen Merkmals zur eindeutigen Identifizierung, wodurch ein gemischter Attributraum erhalten wird, der einen geographischen Teilraum, einen zeitlichen Teilraum und mindestens einen Inhaltsdeskriptorattributteilraum enthält;
Definieren eines raumfüllenden Kurvenindex (102'), der einen gesamten Einzelraum durchläuft, der den geographischen Teilraum, den zeitlichen Teilraum und mindestens einen Deskriptorteilraum umfasst, oder Definieren eines raumfüllenden Kurvenindex (102), der den gesamten geographischen Teilraum durchläuft, eines raumfüllenden Kurvenindex (103), der den gesamten zeitlichen Teilraum durchläuft, und eines raumfüllenden Kurvenindex (104), der den gesamten mindestens einen Inhaltsdeskriptorattributteilraum durchläuft; und
einem zweiten Schritt (200) zum Ausführen einer Online-Abfrage, mit den Schritten:
Extrahieren (202) von geographischen, zeitlichen und Inhaltsdeskriptorattributen von mindestens einem Abfragebeispiel;
für den geographischen Teilraum, den zeitlichen Teilraum und den Inhaltsdeskriptorteilraum und den zugehörigen raumfüllenden Kurvenindex der eingelesenen Bildkacheln:
Auswählen (203-i) eines Abfrageteilraums und Extrahieren eines oder mehrerer Attribute für das Abfragebeispiel, die dem Abfrageteilraum entsprechen;
Extrahieren (203-ii) einer Relevanzdistanz für den Abfrageteilraum; und
Extrahieren (203-iii) aller Bildkacheln, deren Attribute im Abfrageteilraum einer durch die Relevanzdistanz definierten Nachbarschaft zugehörig sind, und Extrahieren der eindeutigen Identifizierungen der extrahierten Bildkacheln; und
Erhalten (204) einer den ausgewählten Bildkacheln entsprechenden thematischen Karte.

2. Verfahren nach Anspruch 1, ferner mit dem Wiederholen der Schritte (203-i, 203-ii, 203-iii und 204) für die verbleibenden Teilräume unter dem geographischen Teilraum, dem zeitlichen Teilraum und dem Inhaltsdeskriptorteilraum.

3. Verfahren nach Anspruch 1 oder 2, wobei der Schritt (203-i) zum Auswählen eines Abfrageteilraums das Bereitstellen der Position eines auf einer Webkarte angeklickten geographischen Punktes aufweist.

4. Verfahren nach einem der vorangehenden Ansprüche, wobei der Schritt (100) zum Bereitstellen von Daten offline ausgeführt wird.

5. Verfahren nach einem der vorangehenden Ansprüche, wobei das mindestens eine anwendungsunabhängige Merkmal, das jeder Kachel angehängt ist, eines oder mehrere der folgenden Merkmale ist: Textur, Farbe und Form.

6. Verfahren nach einem der vorangehenden Ansprüche, wobei die raumfüllende Kurve eine Peano-Kurve oder eine Hilbert-Kurve ist.

7. Verfahren nach einem der vorangehenden Ansprüche, wobei die Relevanzdistanz eine geographische Distanz ist.

8. Verfahren nach einem der vorangehenden Ansprüche, wobei die Bildkacheln durch mindestens eine Fernerfassungsanwendung erhalten und gemanagt werden.

9. System zum Erhalten einer thematischen Karte, mit:
einer Datenbereitstellungseinrichtung (100), die dafür konfiguriert ist, einen gemischten Attributraum zu erhalten, der einen geographischen Teilraum, einen zeitlichen Teilraum und mindestens einen Inhaltsdeskriptorattributteilraum aufweist, durch Einlesen (101) einer Vielzahl von Bildkacheln durch Anhängen einer eindeutigen Identifizierung an jede Kachel und durch Hinzufügen eines Vektors, der den räumlichen und zeitlichen Ort beschreibt, und mindestens eines anwendungsunabhängigen Merkmals zur eindeutigen Identifizierung und zum Definieren eines raumfüllenden Kurvenindexes (102'), der den geographischen Teilraum, den zeitlichen Teilraum und mindestens einen Inhaltsdeskriptorattributteilraum durchläuft;
einer Einrichtung zum Ausführen einer Online-Abfrage (200) und zum Erhalten einer den ausgewählten Bildkacheln entsprechenden thematischen Karte durch Extrahieren (202) von geographischen, zeitlichen und Inhaltsdeskriptorattributen von mindestens einem Abfragebeispiel und durch Auswählen (203-i) eines Abfrageteilraums für den geographischen Teilraum, den zeitlichen Teilraum und den Inhaltsdeskriptorteilraum und des zugehörigen raumfüllenden Kurvenindex der eingelesenen Bildkacheln und Extrahieren eines oder mehrerer Attribute für das Abfragebeispiel, die dem Abfrageteilraum entsprechen; Extrahieren (203-ii) einer Relevanzdistanz für den Abfrageteilraum; und Extrahieren (203-iii) aller Bildkacheln, deren Attribute im Abfrageteilraum einer Nachbarschaft zugehörig sind, die durch die Relevanzdistanz definiert ist, und Extrahieren der eindeutigen Identifizierungen der extrahierten Bildkacheln; und
einer Kommunikationsschnittstelle (44) zum Kommunizieren mit einem Benutzer.

10. Computerprogramm, das einen Computerprogrammcode aufweist, der dazu eingerichtet ist, die Schritte des Verfahrens nach einem der Ansprüche 1 bis 8 auszuführen, wenn das Programm auf einem Computer, einem digitalen Signalprozessor, einem feldprogrammierbaren Gate-Array, einer anwendungsspezifischen integrierten Schaltung, einem Mikroprozessor, einem Mikrocontroller oder einer anderen Form von programmierbarer Hardware ausgeführt wird.

## Revendications

1. Procédé pour obtenir une carte thématique d'un serveur web, comprenant une première étape (100) de fourniture de données, comprenant les étapes consistant en :
l'acquisition (101) d'une pluralité de pavés d'images à partir d'au moins une base de données située dans le nuage, ladite acquisition étant effectuée en attachant à chaque pavé un identifiant unique,
l'ajout audit identifiant unique d'un vecteur décrivant l'emplacement spatial et temporel et au moins une caractéristique indépendante de l'application, obtenant ainsi un espace attributaire mixte comprenant un sous-espace géographique, un sous-espace temporel et au moins un sous-espace attributaire de descripteur de contenu ;
la définition d'un index de courbe de remplissage d'espace (102') traversant l'ensemble d'un espace unique englobant ledit sous-espace géographique, ledit sous-espace temporel et au moins un sous-espace de descripteurs, ou la définition d'un index de courbe de remplissage d'espace (102) traversant l'ensemble du sous-espace géographique, d'un index de courbe de remplissage d'espace (103) traversant l'ensemble du sous-espace temporel et d'un index de courbe de remplissage d'espace (104) traversant l'ensemble d'au moins un sous-espace attributaire de descripteur de contenu ; et
une deuxième étape (200) d'exécution d'une requête en ligne, comprenant :
à partir d'au moins un exemple de requête, l'extraction (202) d'attributs géographiques, temporels et de descripteurs de contenu ;
pour le sous-espace géographique, le sous-espace temporel et le sous-espace de descripteurs de contenu, et l'index de courbe de remplissage d'espace associé, desdits pavés d'images acquis :
la sélection (203-i) d'un sous-espace de requête et l'extraction d'un ou plusieurs attributs pour ledit exemple de requête correspondant audit sous-espace de requête ;
l'extraction (203-ii) d'une distance de pertinence pour ledit sous-espace de requête ; et
l'extraction (203-iii) de tous les pavés d'image dont les attributs dans ledit sous-espace de requête appartiennent à un voisinage défini par ladite distance de pertinence, et l'extraction des identifiants uniques desdits pavés d'image extraits ; l'obtention (204) d'une carte thématique correspondant aux pavés d'image sélectionnés.

2. Procédé selon la revendication 1 comprenant en outre la répétition des étapes (203-i, 203-ii, 203-iii et 204) pour les sous-espaces restants dudit sous-espace géographique, dudit sous-espace temporel et dudit sous-espace de descripteur de contenu.

3. Procédé selon la revendication 1 ou 2, dans lequel ladite étape de sélection (203-i) d'un sous-espace de requête comprend la fourniture de l'emplacement d'un point géographique cliqué sur une carte Web.

4. Procédé selon l'une quelconque des revendications précédentes, dans lequel ladite étape (100) de fourniture de données est effectuée hors ligne.

5. Procédé selon l'une quelconque des revendications précédentes, dans lequel ladite au moins une caractéristique indépendante de l'application attachée à chaque pavé est l'une ou plusieurs des caractéristiques suivantes : texture, couleur et forme.

6. Procédé selon l'une quelconque des revendications précédentes, dans lequel ladite courbe de remplissage d'espace est une courbe de Peano ou une courbe de Hilbert.

7. Procédé selon l'une quelconque des revendications précédentes, dans lequel ladite distance de pertinence est une distance géographique.

8. Procédé selon l'une quelconque des revendications précédentes, dans lequel lesdits pavés d'images sont obtenus et gérés par au moins une application de télédétection.

9. Système pour obtenir une carte thématique, comprenant :
des moyens de fourniture de données (100) configurés pour obtenir un espace attributaire mixte comprenant un sous-espace géographique, un sous-espace temporel et au moins un sous-espace attributaire de descripteur de contenu en acquérant (101) une pluralité de pavés d'image en attachant à chaque pavé un identifiant unique et en ajoutant audit identifiant unique un vecteur décrivant l'emplacement spatial et temporel et au moins une caractéristique indépendante de l'application, et pour définir un index de courbe de remplissage d'espace (102') traversant ledit sous-espace géographique, ledit sous-espace temporel et au moins un sous-espace attributaire de descripteur de contenu ;
des moyens pour exécuter une requête en ligne (200) et obtenir une carte thématique correspondant aux pavés d'image sélectionnés en extrayant (202) des attributs géographiques, temporels et de descripteur de contenu à partir d'au moins un exemple de requête, et, pour le sous-espace géographique, le sous-espace temporel et le sous-espace de descripteur de contenu, et l'index de courbe de remplissage d'espace associé, desdits pavés d'image acquis, en sélectionnant (203-i) un sous-espace de requête et en extrayant un ou plusieurs attributs pour ledit exemple de requête correspondant audit sous-espace de requête, en extrayant (203-ii) une distance de pertinence pour ledit sous-espace de requête ; et en extrayant (203-iii) tous les pavés d'image dont les attributs dans ledit sous-espace de requête appartiennent à un voisinage défini par ladite distance de pertinence, et en extrayant les identifiants uniques desdits pavés d'image extraits ; et
une interface de communication (44) pour communiquer avec un utilisateur.

10. Programme d'ordinateur comprenant des moyens de code de programme informatiques adaptés pour exécuter les étapes du procédé selon l'une quelconque des revendications 1 à 8 lorsque ledit programme est exécuté sur un ordinateur, un processeur de signaux numériques, une matrice prédiffusée programmable par l'utilisateur, un circuit intégré spécifique, un microprocesseur, un microcontrôleur, ou toute autre forme de matériel programmable.
